(19) Europäisches Patentamt
European Patent Office
Office européen des brevets

(11) Veröffentlichungsnummer: **0 278 038**
**A1**

(12) **EUROPÄISCHE PATENTANMELDUNG**

(21) Anmeldenummer: 87102028.5

(22) Anmeldetag: 13.02.87

(51) Int. Cl.⁴: **H04N 3/12 , G09F 9/30 ,**
**G02F 1/19**

Geänderte Patentansprüche gemäss Regel 86 (2) EPÜ.

(43) Veröffentlichungstag der Anmeldung:
17.08.88 Patentblatt 88/33

(84) Benannte Vertragsstaaten:
AT BE CH DE ES FR GB GR IT LI LU NL SE

(71) Anmelder: BATTELLE MEMORIAL INSTITUTE
7 route de Drize
CH-1227 Carouge/Genève(CH)

Anmelder: Battelle-Institut e.V.
Am Römerhof 35 Postfach 900 160
D-6000 Frankfurt/Main 90(DE)

(72) Erfinder: Gross, Daniel
40, route des Acacias
CH-1227 Carouge/Genf(CH)
Erfinder: Hewig, Gert
Kastanienweg 15a
D-8755 Alzenau(DE)
Erfinder: Dornhaus, Ralf
Unter den Weingärten 24a
D-6451 Hammersbach 1(DE)
Erfinder: Harmer, Alan L.
74, chemin de la Mere Voie
CH-1228 Plan-Les-Ouates(CH)

(74) Vertreter: Dousse, Blasco et al
7, route de Drize
CH-1227 Carouge/Genève(CH)

(54) Aktiver Bildschirm in Flachbauweise.

(57) Beschrieben wird ein aktiver Bildschirm in Flachbauweise mit in Zeilen und Spalten angeordneten Signalleitungen, die an ihren Kreuzungspunkten Bildpunkte des Bildschirms definieren, wobei die in Spalten angeordneten Leitungen als Elektroden und die in Zeilen angeordneten Signalleitungen durch Lichtwellenleiter ausgebildet werden, in die eingangsseitig ein moduliertes Lichtsignal eingekoppelt wird und die an jedem Kreuzungspunkt eine Einrichtung zum Auskoppeln des betreffenden Lichtsignals aufweisen.

Verglichen mit herkömmlichen aktiven Bildschirmen in Flachbauweise zeichnet der erfindungsgemäße Bildschirm insbesondere durch eine gute Bildauflösung und einen guten Kontrastumfang aus, verbunden mit einer guten Bildwechselfrequenz.

Fig.1

## Aktiver Bildschirm in Flachbauweise

Die Erfindung betrifft einen aktiven Bildschirm in Flachbauweise mit in zwei Gruppen, nämlich in Zeilen und in Spalten angeordneten Signalleitungen, die an ihren Kreuzungspunkten Bildpunkte des Bildschirms definieren, mit einer Steuerung und Signalaufbereitung für die den Signalleitungen zugeleiteten Bildinformationen und mit wenigstens einem Lichtelement, das an jedem Kreuzungspunkt entspechend moduliertes Licht aussendet.

Derartige aktive Bildschirme sind bekannt, bei denen die Bildpunkte durch Flüssigkristalle erzeugt werden. Beide Gruppen der Signalleitungen sind hierbei durch elektrische Leitungen ausgebildet, wobei sich an deren Kreuzungspunkten jeweils der Flüssigkristall befindet. Die bekannten Bildschirme benötigen zu ihrer Funktion an jedem Kreuzungspunkt ein aktives elektronisches Schaltelement (eine Diode oder einen Transistor). Sie sind deshalb relativ schwierig herzustellen. Diese bekannten Bildschirme weisen überdies eine beschränkte Bildwechselfrequenz, Bildauflösung und einen sehr beschränkten Kontrastumfang auf, der sich für eine wirklichkeitsnahe Darstellung von Fernsehbildern oder auch für eine ermüdungsfreie Darstellung von Informationen auf Monitoren nur schlecht eignet.

Ein anderer bekannter Typ derartiger aktiver Bildschirme verwendet miniaturisierte Elektronenstrahlröhren, wobei der Elektronenstrahl um etwa 90 abgelenkt wird und auf eine neben der Elektronenkanone angeordnete Fluoreszenzschicht auftrifft. Diese aktiven Bildschirme sind jedoch für viele Anwendungszwecke ungeeignet, da sie eine verhältnismäßig große Bautiefe aufweisen.

Die Erfindung vermeidet diese Nachteile. Ihr liegt die Aufgabe zugrunde, einen aktiven Bildschirm vorzuschlagen, der in Flachbauweise hergestellt werden kann und sich insbesondere durch eine gute Bildwechselfrequenz, Bildauflösung und einen guten Kontrastumfang auszeichnet, so daß der erfindungsgemäße Bildschirm insgesamt für eine wirklichkeitsnahe Darstellung von Fernsehbildern und anderen Informationen geeignet ist. Der erfindungsgemäße Bildschirm soll vorzugsweise in kleinem Format ausgeführt werden können, so daß er auf kurze Distanz mit dem bloßen Auge, mit einer Lupe oder auch mit einem Okular betrachtet werden kann.

Zur Lösung dieser Aufgabe ist die Erfindung dadurch gekennzeichnet, daß eine der beiden Gruppen der Signalleitungen durch Lichtwellenleiter gebildet wird, in die eingangsseitig das modulierte Lichtsignal eingekoppelt wird und die an jedem der Kreuzungspunkte eine von der Steuerung beaufschlagbare Einrichtung zum Auskoppel des in diesem Lichtwellenleiter vorhandenen optischen Signals in einer im wesentlichen senkrecht zur Ebene des Bildschirms verlaufenden Richtung aufweisen.

Über die erfindungsgemäß verwendeten Lichtwellenleiter erhält man somit eine gute optische Qualität des vom Bildschirm abgestrahlten Bildes. In die Lichtwellenleiter wird eingangsseitig das entsprechend modulierte optische Signal eingekoppelt und an den Kreuzungspunkten wird das Signal ausgekoppelt und ergibt somit den betreffenden Bildpunkt bzw. in der Gesamtheit der Bildpunkte das Bild. Über die zweite Gruppe der Signalleitungen, im allgemeinen elektrische Signalleitungen (Streifenelektroden) und die zugeordnete Steuerung wird das Bild des Bildschirms sequentiell aufgebaut, d. h. die Bildpunkte des Bildschirmes werden parallel zueinander oder nacheinander in jeder Zeile und nacheinander Zeile für Zeile in so kurzer Folge erregt, daß sich das Bild für den Betrachter ergibt.

Bevorzugte Ausführungsformen der Erfindung sind in den Unteransprüchen angegeben.

Die Erfindung wird im folgenden anhand von Ausführungsbeispielen näher erläutert, aus denen sich weitere wichtige Merkmale ergeben. Es zeigt:

Fig. 1 schematisch und perspektivisch eine Darstellung zur Erläuterung des Grundprinzips der Erfindung;

Fig. 2 ebenfalls schematisch und perspektivisch die einzelnen Baugruppen, die den erfindungsgemäßen Bildschirm aufbauen;

Fig. 3 schematisch und perspektivisch eine Ausführungsform der Einrichtung zur Lichterzeugung und Lichtmodulation in den Wellenleitern;

Fig. 4a bis 4c einen hierbei verwendeten optischen Lamellenmodulator;

Fig. 5 das Prinzip eines optomechanischen Totalreflexions-modulators;

Fig. 6a perspektivisch ein elektrooptisches Modulatorarray;

Fig. 6b eine Stirnansicht von Fig. 6 a;

Fig. 7a eine erste Ausführungsform des Aufbaus einer integriert-optischen Struktur zur Verteilung der Bildinformation;

Fig. 7b eine zweite Ausführungsform dieses Aufbaus;

Fig. 8 schematisch eine Anordnung mit einem piezoelektrisch getriebenen, mikromechanischen Schalter mit Abstrahlung durch Spaltenstäbchen;

Fig. 9 eine Anordnung ähnlich Fig. 8 mit Abstrahlung durch ein Substrat;

Fig. 10a bis 10e eine schematische Darstellung verschiedener Auskopplungsmethoden, und zwar jeweils links in diesen Figuren in nicht ausgekoppeltem Zustand und rechts in ausgekoppeltem Zustand;

Fig. 11 eine Darstellung zur Eläuterung der Farbansteuerung mit Zeitmultiplexverfahren über Filter;

Fig. 12 eine Ausführungsform der Farbansteuerung im Zeitmultiplexverfahren.

Mit der vorliegenden Erfindung soll ein vorzugsweise kleinformatiger, aktiver Bildschirm in Flachbauweise geschaffen werden, dessen Betrieb ohne nachteilige Beeinflussung der Lichtausbeute und des Kontrastes mit geringer elektrischer Leistung möglich ist und mit dem sich tragbare, miniaturartige Video-Displays realisieren lassen.

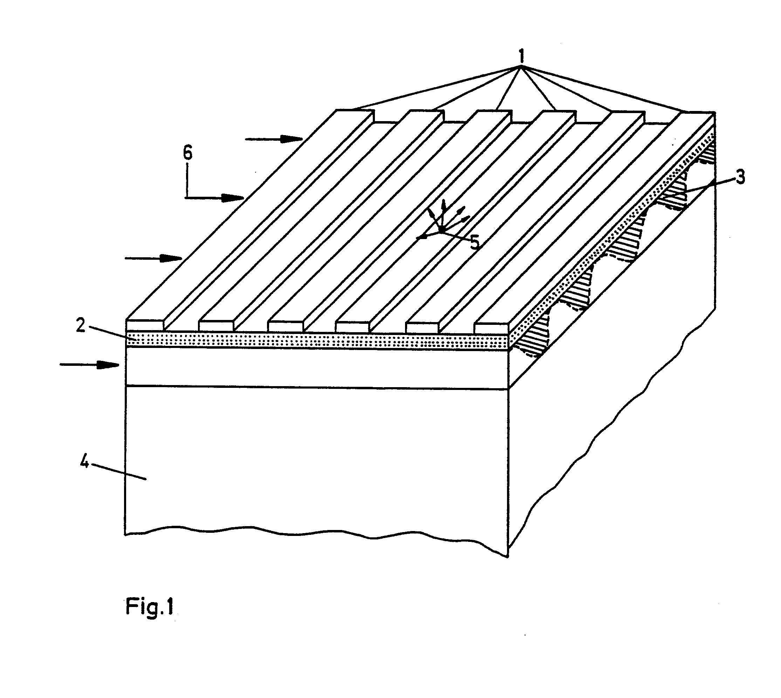

Hierzu zeigt Fig. 1 als Prinzipdarstellung eine erste Gruppe von in Spalten angeordneten Streifenelektroden 1. An der Unterseite der Streifenelektroden befindet sich eine Schicht, die als Einrichtung 2 zur Lichtauskopplung dient. Darunter wiederum befindet sich eine zweite Gruppe von in Zeilen angeordneten Lichtwellenleitern 3. Die Anordnung ist auf einen Träger 4 aufgebracht.

Die Kreuzungspunkte 5 zwischen den Streifenelektroden 1 und den Lichtwellenleitern 3 stellen die Bildpunkte des aktiven Bildschirms dar. Hierzu ist in Fig. 1 bei Pos. 5 angedeutet, wie dort das Licht in den oberen Halbraum abgestrahlt wird. Die Pfeile links in Fig. 1 symbolisieren die bereits entsprechend der Bildinformation hell/dunkel modulierten Lichtsignale. Die integriert-optische Wellenleiterstruktur mit den Lichtwellenleitern 3 bewirkt die zweidimensionale, räumliche Verteilung der Lichtsignale. Eine Ansteuerung der kreuzenden Elektroden 1 erlaubt die Auskopplung der Lichtsignale an den bestimmten Bildpunkten oder Kreuzungspunkten 5.

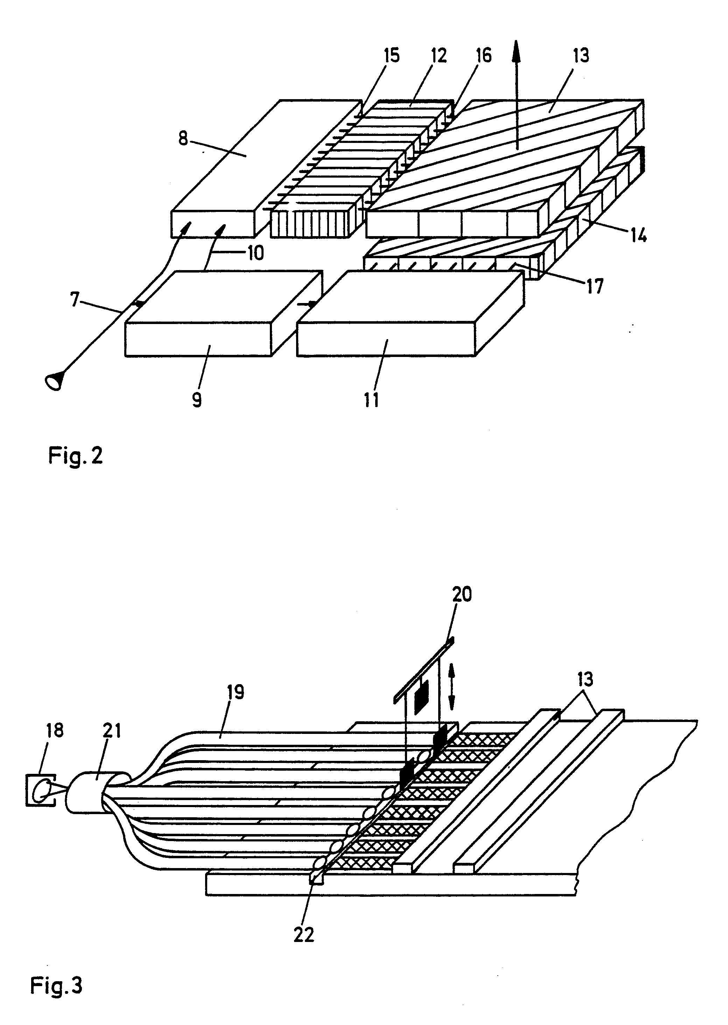

Fig. 2 zeigt die wesentlichen Baugruppen eines aktiven Bildschirms unter grundsätzlicher Verwendung der in Fig. 1 skizzierten Anordnung. Daraus ergibt sich, daß ein Video-Eingangssignal über eine Leitung 7 in eine Bildsignalaufbereitungs-Elektronik 8 eingegeben wird. Das Video-Eingangssignal gelangt außerdem gleichzeitig zu einer Zeitsynchronisations-und Steuerelektronik 9, die über eine weitere Leitung 10 auch an die Elektronik 8 angeschlossen ist. Die Ausgangssignale der Elektronik 9 gelangen außerdem zu einer Ansteuerungselektronik 11 für die Streifenelektroden.

An die Ausgänge der Elektronik 8 ist eine Bildsignalerzeugungs-Elektrooptik 12 angeschlossen und an deren Ausgänge wiederum eine integriert-optische Struktur 13 zur Verteilung der Bildinformation. Diese widerum ist verbunden mit einer Bildpunkt-Auskoppelstruktur 14, die von den Ausgängen der Elektronik 11 angesteuert wird.

Über die Leitung 10 werden Synchronissationssignale in die Elektronik 8 abgegeben und über Leitungen 15 werden am Ausgang der Eletronik 8 anstehende, parallele elektrische Bildsignale in den Eingang der Elektrooptik 12 eingegeben. Am Ausgang dieser Elektrooptik 12 werden wiederum über Leitung 16 parallele, optische Bildsignale in die Struktur 13 eingegeben. Die Leitungen 17 - schließlich deuten die sequentiell-elektrische Ansteuerung der Struktur 14 an.

Die schraffierten Baugruppen 12, 13, 14 bilden den eigentlichen Kern des erfindungsgemäßen Bildschirms, während die weiteren Baugruppen 8, 9 11 and sich bekannt sind. Die Strukturen 13, 14 entsprechen im wesentlichen der anhand von Fig. 1 erläuterten Anordnung.

Die Anordnung nach Fig. 2 arbeitet grundsätzlich wie folgt.

Die Bildsignalaufbereitungs-Elektronik 8 erhält beispielsweise ein normiertes Televisions-Videosignal, welches Zeile für Zeile seriell übermittelt wird. Ein derartiges Signal enthält 2×25-mal pro Sekunde ein im Zeilensprungverfahren kodiertes Fernsehbild. Die Elektronik 8 speichert ein erstes serielles vollständiges Bild und übermittelt dieses Bild nach Seriell-Parallel-Konversion in derjenigen Zeitspanne an die elektrooptische Baugruppe 12, während welcher das zweite Bild in den Speicher eingelesen wird.

Wenn man von einem Bild mit N Zeilen ausgeht, dann wird in der Elektronik-Baugruppe 8 die analog-elektrisch kodierte Videoinformation jeder Zeile gespeichert und, um den Faktor N zeitlich gedehnt, auf jeder der N Bildsignallinien gleichzeitig, d. h. parallel, in die eltrooptische Baugruppe 12 eingespeist. Je nach Ausführungsform der erfindungsgemäßen Baugruppe 12 müssen hierbei die eingespeisten parallelen und zeitlich gedehnten Zeilen-Videosignale spannungs-und impedanzmäßig an die entsprechenden elektrooptischen Signalwandler angepaßt werden.

Die bildsignalerzeugende Elektrooptik-Baugruppe 12 kann in verschiedenen Ausführungsformen realisiert werden.

In einer ersten Ausführungsform treiben die N Bildsignallinien eine Linearanordnung von N elektrolumineszenten Halbleiterdioden, welche ihre Zeilenbildsignale ihrerseits in die N optischen Glasfasern oder integriert optischen Wellenleiter einspeisen. In Fig. 2 sind diese N Lichtleiter symbolisch als Verbindungen zwischen den Baugruppen 12 und 13 dargestellt. In dieser ersten Ausführungsgorm werden die N Leuchtdioden oder Halbleiter-Laser vorzugsweise zusammen auf einem Substrat in integrierter oder in Hybrid-Technik aufgebaut. Diese Bauweise erlaubt es, die zur Einkopplung in die N Lichtleiter notwendige hohe Justiergenauigkeit zu erreichen.

Mit heute üblichen Leuchtdioden hoher Effizienz lassen sich bei einem Strom von ca. 20mA Ausgangssignale von etwa 120mCd erreichen. Nimmt man an, daß im Mittel jeweils die Hälfte der Bildpunkte einer Spalte, also die Hälfte aller jeweils einer Zeile entsprechenden Dioden, hell sind, und berücksichtigt alle nachfolgenden Verluste durch einen Faktor 100, so ergibt sich als Beispiel für einen 5×5 cm² großen Display mit 600 Zeilen ein Wert von 144 Cd/m². Dieser Wert ist als mittlere Helligkeit für einen Display ausreichend.

Die Anzahl der benötigten Leuchtdioden läßt sich durch Verwendung von integriert optischen Richtungskopplern zur sequentiellen Ansteuerung mehrere Zeilen mit einer Leuchtdiode evtl. verringern.

In einer zweiten Ausführungsform der elektrooptischen Baugruppe 12 werden die Lichterzeugungs-und die Lichtmodulations-Funktionen getrennt.

Die Lichterzeugung wird hierbei vorzugsweise durch eine spezielle (Niedervolt-) Glühlampe 18 realisiert, welche eine gerade gestreckte Glühwendel enthält. (vgl. Fig. 3) Das von der Wendel ausgehende Lichtbündel wird über einen optischen Kondensor oder über einen Lichtleiter 21 mit großem Kerndurchmesser sowie über ein optisches Faserbündel 19 auf die in einer geraden Linie angeordneten N Eingangspupillen einer Reihe von N elektrooptischen Modulatoren 20 abgebildet.

Die N Modulatoren 20 werden hierbei von den N elektrischen Bildsignallinien parallel angesteuert. Die von den N Modulatoren zeitlich gesteuerten optischen Bildsignale werden entweder mittels eines Objektivs oder vorzugsweise über Lichtleiter in die N Eingänge der Baugruppe 13 eingespeist.

Die in Reihe angeordneten N elektrooptischen Modulatoren können hierbei wiederum in verschiedenen Ausführungsformen realisiert werden.

In einer ersten Ausführungsform besteht jeder Modulator 20 aus einem Eingangspolarisator, einer elektrooptischen Kerr-Zelle und aus einem Ausgangspolarisator. Die Polarisatoren sind hierbei derart angeordnet, daß die Modulatorzelle im spannungslosen Zustand das einfallende Licht blockiert und bei Anlegen eines Video-Zeilensignals eine entsprechend zeitlich modulierte Lichtintensität durchläßt. Die N Kerr-Zellen können hierbei vorzugsweise als hybrid-integrierte elektrooptische Keramik vom PLZT-Typ oder als elektrooptisch aktive Polymerplättchen ausgebildet werden, welche auf einer Substratplatte montiert sind.

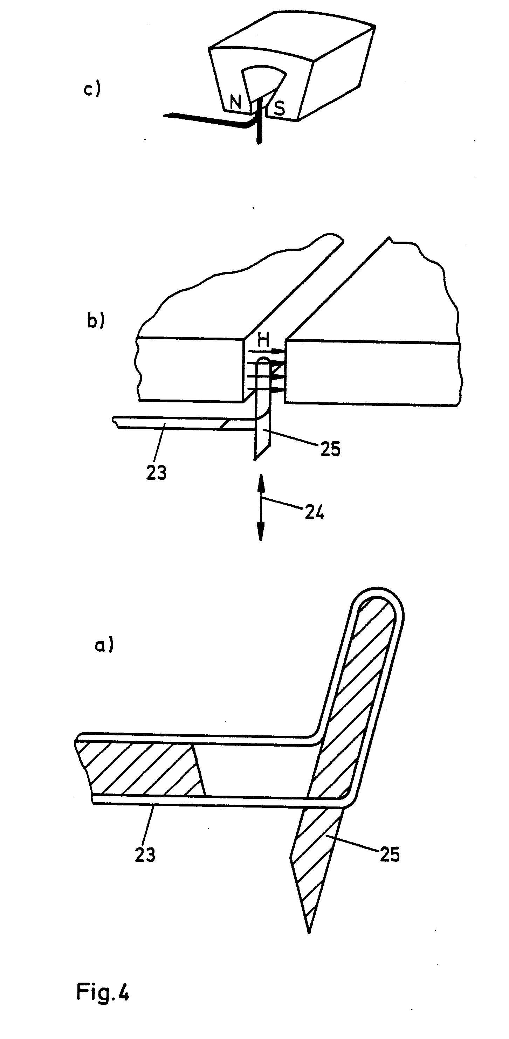

In einer zweiten Ausführungsform (Fig. 4) ist jeder der N Modulatoren 20 als piezoelektrisch, elektrodynamisch, elektromagnetisch oder elektrostatisch stellbare Blendenlamelle 25 ausgeführt. Diese taucht mehr oder weniger tief in einen Trennspalt 22 jeweils eines Wellenleiters 3 oder einer optischen Faser ein und schwächt so den Lichtstrom proportional zu ihrer Stellung. (S.

Pfeile 24 in Fig. 4b)

Fig. 4a zeigt auch einen Lamellenhalter 23 und Fig. 4c erläutert die hierbei vorgesehene Polanordnung (N = Nordpol; S = Südpol).

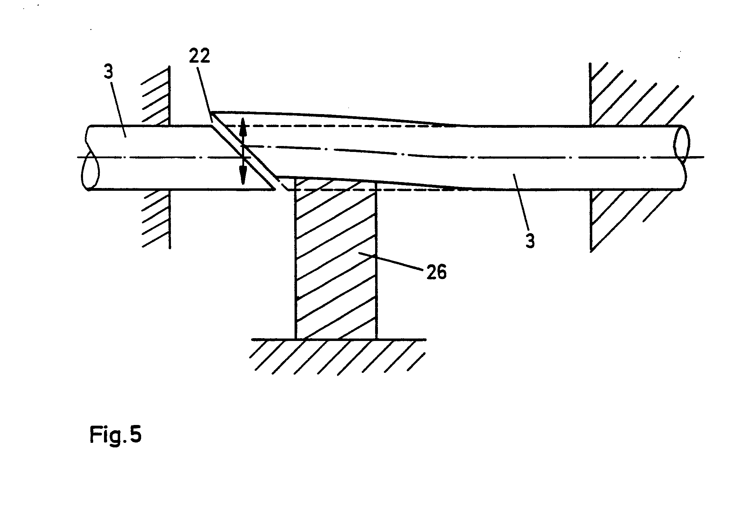

In einer dritten Ausführungsform ist jeder der N Modulatoren 20 als optomechanischer Totalreflexions-Modulator ausgebildet (Fig. 5). Jeder Modulator besteht hierbei aus einer Lichtleiterfaser oder aus dem integriert optischen Wellenleiter 3, in welchem sich ein schief zur Strahlrichtung angeordneter Trennspalt 22 befindet, dessen Spaltbreite durch ein piezoelektrisches Stellelement 26 zwischen Null und einem maximalen Abstand in der Größenordnung von einer oder einigen Lichtwellenlängen moduliert werden kann. Wenn die Spaltbreite auf Null reduziert wird, dann wird das in den Wellenleiter eingespeiste Licht sich praktisch reflexionsfrei über die Spaltstelle fortpflanzen und den entsprechenden Lichtwellenleiter 3 der Baugruppe 13 erreichen. Bei Öffnung des Spalts 22 wird ein anfangs zur Spaltbreite proportionaler Lichtbruchteil aus dem Spalt wegreflektiert derart, daß entsprechend weniger Licht in den Lichtwellenleiter der Baugruppe 13 einfällt.

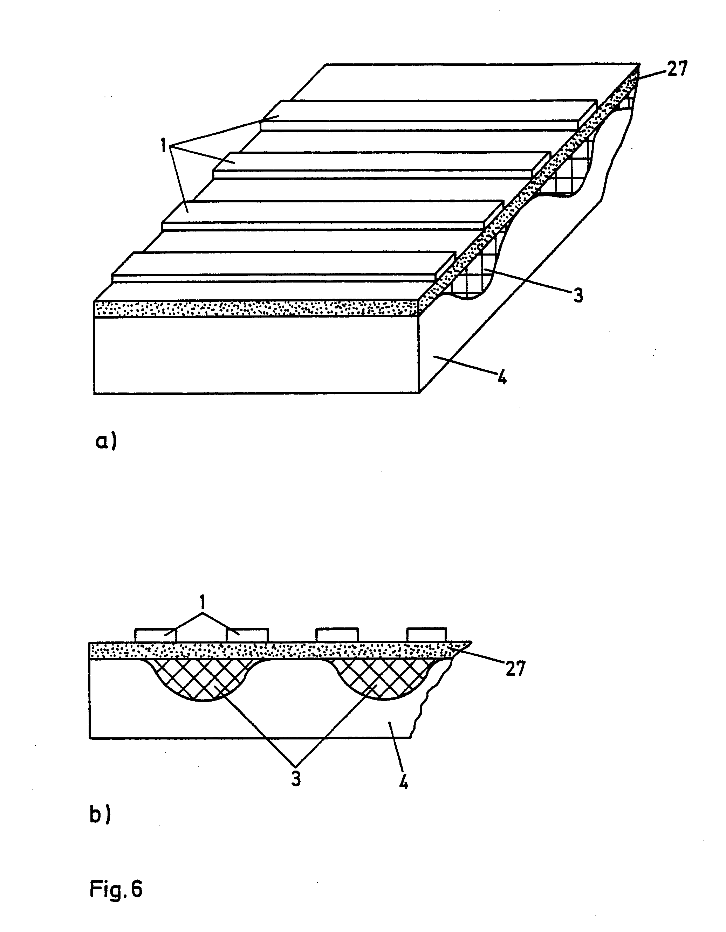

In einer weiteren Ausführungsform ist jeder der optischen Modulatoren 20 als elektrooptischer Modulator ausgebildet (Fig. 6). Hierbei wird der Wellenleiter 3 selbst aus einem elektrooptisch aktiven Material hergestellt oder damit als Claddingschicht 27 überdeckt. Durch Anlegen eines elektrischen Feldes läßt sich der Brechungsindex dieses Materials derart verändern, daß die optischen Bedingungen für die Führung des Lichtes in dem Wellenleiter verändert werden und dadurch der transmittierte Lichtstrom entsprechend moduliert wird.

Weitere Ausführungsformen können auf der Basis von anderen, an sich bekannten fiberoptischen Lichtmodulatoren realisiert werden; z. B. Mikrokrümmungsmodulatoren, Polarisationszustands-Modulatoren etc.

Die integreiert-optische Struktur 13 dient zur Verteilung der Bildinformation:
Aufgrund der geringen Streuung und Absorption wird das in die Lichtwellenleiter 3 eingekoppelte Licht im Normalzustand ungestört durch die Wellenleiter transmittiert und verläßt diese am anderen Ende. Eine Streuung in den Raum senkrecht zur Richtung der Wellenleiter findet praktisch nicht statt. Eventuelle Dämpfungsverluste in jeder Zeile lassen sich zur Erzielung einer gleichmäßigen Helligkeit bei der später beschriebenen Auskopplung über den zeitlichen Verlauf der Intensität der jeweiligen Lichtquelle kompensieren.

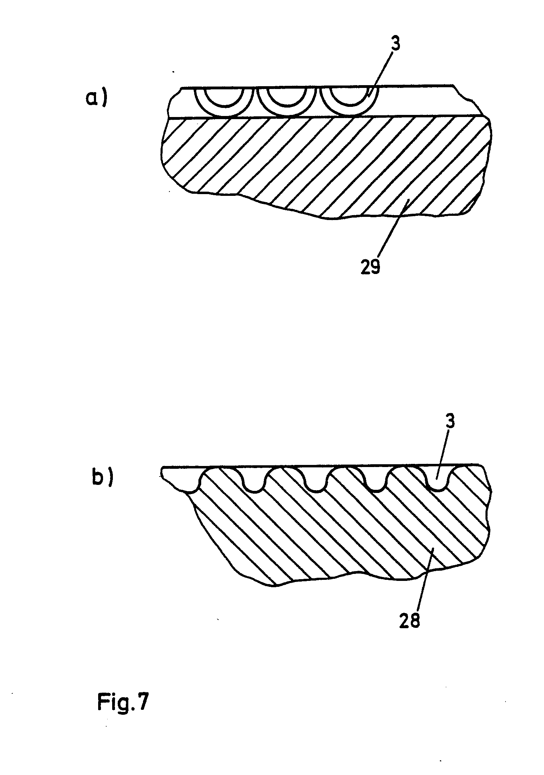

Die durch die N parallelen Wellenleiter 3 repräsentierte integriert optische Struktur zur räumlichen Verteilung der Bildinformation kann in verschiedenen Ausführungsformen hergestellt werden (Fig. 7).

In einer ersten Ausführungsform werden N unter sich parallele Lichtwellenleiter 3 auf ein transparentes Substrat 28 integriert (s. Fig. 7b). Das Substrat kann hierbei beispielsweise aus einer polierten Glasplatte bestehen, auf welcher vermittels einer bekannten photolithographischen Technik Silberionen in der gewünschten Wellenleitergeometrie in die Glasoberfläche eindiffundiert werden. Nach Abschluß dieses Diffusionsprozesses wird die Diffusionsmaske entfernt. Man erhält auf diese Weise N eingebettete parallele Mono-oder Multimode-Wellenleiter 3 von etwa halbmondförmigem Querschnitt. Das in einen derartigen Wellenleiter eingespeiste Licht erfährt hierbei sowohl an der Wellenleiter-Glassubstrat-Grenzschicht wie auch an der Wellenleiter-Luft-Grenzfläche eine Totalreflexion derart, daß es sich verlustarm entlang dem Wellenleiter fortpflanzen kann. Integriert optische Streifenleiter der beschriebenen Form können nicht nur mittels der skizzierten Eindiffusions-Methode hergestellt werden. Andere Realisierungsmöglichkeiten sind z. B.:
- Eindrücken und Verfüllen von Polymer-oder Mischoxidmatrix
- selektives Ätzen und Oxidieren von Silizium,
- photoinduzierte Selbstkondensation etc.

In einer zweiten, optischen nahezu gleichwertigen Ausführungsform werden N unter sich parallele optische Glasfasern 3 vermittels eines durchsichtigen Polymer-Klebstoffes auf die Oberfläche einer planpolierten Glasplatte 29 montiert. In einem nächsten Arbeitsgang wird hierauf die derartig vorbereitete Glasplatte auf ziemlich genau die halbe Glasfaserdicke heruntergeschliffen und planpoliert. Es ergibt sich wiederum innerhalb des Kerns jeder Glasfiber ein Lichtleiter 3 mit approximativ halbmondförmigem Querschnitt.

Der integriert optischen Lichtverteilungsstruktur 13 wird die Bildpunkt-Auskoppelstruktur 14 überlagert. Diese besteht typischerweise aus einer Anzahl von M streifenförmigen, senkrecht zu den Wellenleitern 3 angebrachten und evtl. noch weiter strukturierten Elektroden 1. Diese bilden mit den Lichtwellenleitern eine Art Gitter mit $M \times N$ Kreuzungspunkten 5, die im wesentlichen die Bildpunkte des Displays repräsentieren. Durch eine geeignete Ansteuerung der Spaltenelektroden 1 wird erreicht, daß die Bedingung für die fast verlustlose Führung des Lichts im jeweiligen Wellenleiter nicht mehr erfüllt ist. Entsprechend wird die Lichtquelle nun nach außen abgestrahlt und in den Halbraum vor dem Display zum Betrachten freigegeben.

Um eine Lichtemission bzw. Lichtauskopplung zu erhalten, muß Licht in die entsprechende Zeile eingekoppelt werden und die entsprechende Spalte muß gleichzeitig aktiviert sein. In der einfachsten Realisierung genügt es, die im Normalzustand deaktivierten Spalten seriell über eine binäre Information zu aktivieren. Die eigentlichen Bildinformationen, d. h. Helligkeit und Graustufen, werden durch die Intensität des modulierten eingekoppelten Lichts vermittelt.

Zum Scannen des Displays wird dann seriell jeweils eine Spalte aktiviert und gleichzeitig werden die einem mehr oder weniger hellen Bildpunkt in dieser Spalte entsprechenden Leuchtdioden im Parallelbetrieb pulsförmig entsprechend der gewünschten Helligkeit erregt. Anschließend wird der Vorgang für die jeweils nächste Spalte wiederholt.

Ein entsprechendes Resultat kann in einer anderen Ausführungsform der elektrooptischen Baugruppe vermittels einer Lichttransmissions-Modulation erreicht werden.

Die über die Streifenelektroden angesteuerten Bildpunkt-Auskopplungsstruktur 14 kann in verscheidenen Ausführungsformen realisiert werden. Zu unterscheiden sind zunächst zwei Hauptausführungsformen:
- eine piezoelektrisch getriebene mikromechanische Variante und
- eine elektrooptische oder thermooptische Variante.

In einer ersten Hauptausführungsform (piezoelektrisch getriebene mikromechanische Schalter) wird die Auskopplungsstruktur vermittels einer von der Ansteuerung der Streifenelektroden 1 anhängigen Modulation der Totalreflexion an der Oberfläche der Lichtwellenleiter 3 erreicht. Zu diesem Zweck wird diese Grenzfläche für jeden Lichtleiter gleichzeitig mit einem Spaltenstäbchen in optischen Kontakt gebracht. Dieser optische Kontakt bewirkt, daß jeder Lichtleiter zu einem bestimmten Zeitpunkt an derselben Bildspalte das bis zu diesem Ort hin geführte Licht nach außen abstrahlt. Eine spezielle Abtastung der Bildspalten vom ersten bis zum letzten erlaubt es, die gesamte Länge der Lichtleiter und damit die gesamte Fläche des Bildschirms sequentiell zu überstreichen. Die in der Regel offenen optischen Kontakte müssen demnach sequentiell und spaltenweise kurzfristig geschlossen und dann wiederum geöffnet werden. Nimmt man beispielsweise 25 Bilder pro Sekunde an und insgesamt M = 400 Spalten, dann ergibt sich für jeweils eine optische Kontaktschließ-und Öffnungsphase eine Zeitspanne von 100 Mikrosekunden.

In der Zeitspanne, während der der optische Kontakt geschlossen ist, verläßt das im Wellenleiter geführte Licht diesen Wellenleiter durch die Kontaktfläche in einem flachen Winkel. Es ist deshalb notwendig, diesen Austrittswinkel vermittels eines zusätzlichen optischen Bauteils aufzusteilen derart, daß das hinausgeführte Licht danach etwa senkrecht zu der durch die Lichtleiter geformten Ebene abgestrahlt wird.

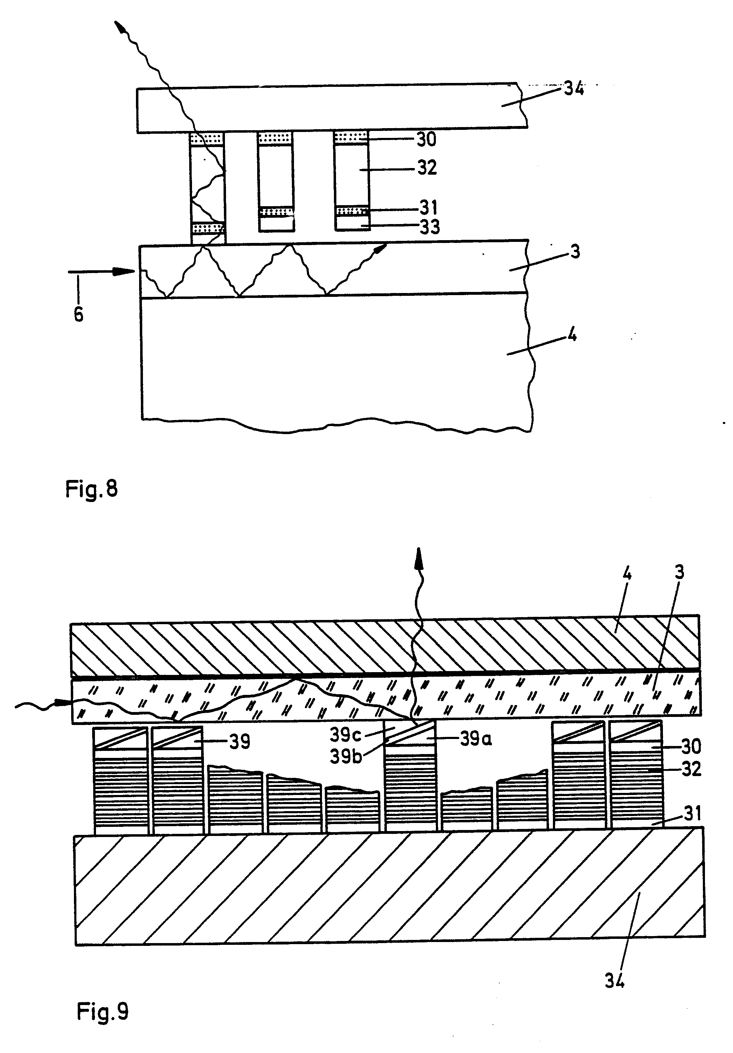

Die sogenannten Spaltenstäbchen stellen eine besondere Gestaltung der Streifenelektroden 1 dar. Die Streifenelektroden werden hierfür zweigeteilt ausgeführt (Fig. 8) und bestehen für jede Spalte somit aus zwei übereinanderliegenden transparenten Elektroden 30 und 31. Zwischen diesen Elektroden wird für jede Spalte eine piezoelektrische, transparente Schicht 32 angeordnet. Zusätzlich kann auch eine transparente Kontaktschicht 33 als Isolatorschicht vorgesehen werden. Die so modifizierten Streifenelektroden werden auf einer transparenten Deckschicht 34 fixiert.

Da die Dicke der piezoelektrischen Zwischenschichten 32 durch eine angelegte Spannung verkleinert wird, ist im spannungsführenden Zustand immer eine Lücke zwischen den angesteuerten Lichtwellenleitern 3 und der Isolatorschicht 33 vorhanden. Durch Unterbrechen der Spannung wird der Luftspalt zwischen den Wellenleitern und dem Spaltenstäbchen auf Null reduziert, so daß nun nicht mehr die Luft, sondern das Elektrodenmaterial oder eine spezielle Isolationsschicht die Nachbarphase zum Wellenleiter bilden. Die durch die Änderung der Nachbarphase bewirkte Brechungsindexänderung des angrenzenden Mediums führt zu einer lokalen Lichtauskopplung.

Da jede der streifenförmigen piezoelektrischen Zwischenschichten 32 einen größeren Brechungsindex als ihre Umgebung aufweist, ist innerhalb dieser Zwischenschichten eine seitliche Streuung des Lichtes praktisch ausgeschlossen. Der Beobachter erkennt deshalb jeden Kreuzungs-und Berührungspunkt zwischen einem Lichtwellenleiter und einer Isolatorschicht als leuchtenden Bildpunkt, dessen Helligkeit der Lichtintensität proportional ist, welche in den entsprechenden Wellenleiter eingespeist wird.

Zwei Ausführungsvarianten können hierbei in Betracht gezogen werden.

In einer ersten Ausführungsvariante (Abstrahlung durch Spaltenstäbchen; Fig. 8) wird das Licht, in derselben Halbebene, in der es aus den Lichtleitern austritt, dem Beobachter zugeführt. Dies bedeutet, daß das Licht durch die piezoelektrische Kolonnenstruktur (Spaltenstäbchen), welche die optische Kontaktein-und ausschaltung bewirkt, senkrecht hindurchtreten muß.

In einer zweiten Ausführungsform (Abstrahlung durch Substrat; Fig. 9) wird das aus den Lichtleitern herausgelenkte Licht vermittels spezieller, in Kolonnenrichtung angeordneter Spiegelstreifen 39 reflektiert derart, daß es die Lichtleiter ungefähr senkrecht zu deren optischen Achsen durchsetzt und die durchsichtige Substratplatte durchquert, um hierauf den Beobachter zu erreichen. In dieser Ausführungsvariante verläßt demnach das Licht den gesamten aktiven Bildschirm in der Halbebene, welche derjenigen entgegengesetzt ist, in der es die optischen Lichtleiter zuerst verlassen hatte.

Die Spiegelstreifen 35 bestehen hierbei aus einem ersten bzw. zweiten prismatischen Element 39a bzw. 39c, mit dazwischen befindlicher Spiegelschicht 39b.

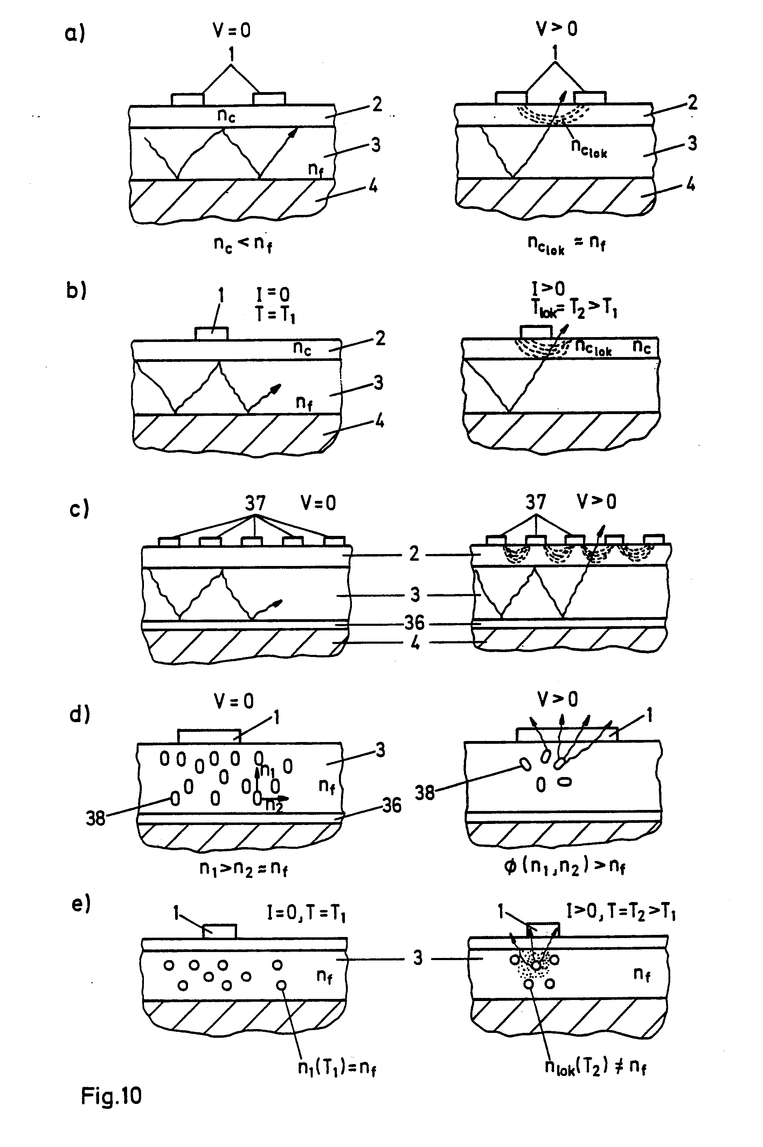

In einer zweiten Hauptausführungsform (elektrooptische oder thermooptische Auskopplung) wird die durch ein Spannungssignal an den Spaltenelektroden induzierte Auskopplung des Lichts aus dem jeweiligen Lichtwellenleiter mittels elektrooptischer oder thermooptischer Methoden erzielt, die im folgenden näher beschrieben und in Fig. 10 schematisch skizziert sind. Gemeinsam ist allen diesen Methoden, daß der Brechungsindex einer Materialkomponente entweder direkt elektrooptisch durch das angelegte elektrische Feld oder indirekt durch die vermittels lokal erzeugter Joulescher Wärme hervorgerufene Temperaturzunahme verändert wird. Als eine weitere alternative Möglichkeit kann auch die elektrisch induzierte Rotation der Polarisationsrichtung einer auskoppelnden Lichtleitermode ausgenutzt werden.

Die direkte elektrooptische Auskopplung wird in Fig. 10a schematisch beschrieben. Hierbei wird der Brechungsindex der Isolatorschicht 2 der in Fig. 1 dargestellten Ausführungsform des Displays so verändert, daß eine verlustarme Führung des Lichtes im Wellenleiter 3 nicht mehr möglich ist. Die Änderung wird durch das elektrische Feld erzielt, welches beim Anlegen einer Spannung an zwei benachbarte oder oberhalb und unterhalb des Wellenleiters angeordnete Streifenelektroden 1 bzw. 1 und 36 entsteht. An der durch die Brechungsindexänderung lokal und temporär modifizierten Stelle findet also eine Ankopplung der bis dorthin geführten Wellenleitermoden an das Kontinuum der strahlenden Moden im Außenraum statt. Dies bedeutet, daß lokal die Bedingung für die interne Totalreflexion unterschritten wird (s. rechter Teil von Fig. 10a). Die Vorzugsrichtung der Lichtabstrahlung wird durch die Art der Moden und den erzielbaren Brechungsindexunterschied bestimmt. Dieser wird, bestimmt durch die verwendeten Materialien, relativ klein sein. Typische Werte für den Unterschied zwischen dem Brechungsindex $n_a$ des Isolatormaterials und $n_f$ des Wellenleitermaterials liegen zwischen einigen $10^{-2}$ und $10^{-3}$. Die Hauptabstrahlung erfolgt also in einem sehr flachen Winkel relativ zur Oberfläche.

Eine Verbesserung der Abstrahlcharakteristik läßt sich entweder durch eine stark streuende Schicht oder durch ein optimiertes Diffraktionsgitter auf dem Isolatormaterial oder durch ein Isolatormaterial mit einem geeigneten Brechungsindexgradienten zum Umlenken des Lichts erreichen.

Als Materialien zur Realisierung der elektrooptischen Isolatorschicht kommen u. a. folgende Substanzen infrage:
- Kaliumniobat, Lithiumniobat,
- Bleioxid, Bleizirkonattitanat (PZT), Bleilanthanzirkonattitanat (PLZT),
- Polydiacethylene,
- Paranitroaniline,
- elektrooptische Farbstoffe in Polymermatrizen,
- Stilbene in Langmuir-Blodgett-Filmen usw.

Statt durch elektrooptische Veränderung des Brechungsindexes der Isolatorschicht läßt sich dieser auch durch eine lokale Temperaturerhöhung, hervorgerufen über die durch einen elektrischen Strom erzeugte Joulesche Wärme, beeinflussen (Fig. 10b). Ansonsten entspricht dieses Verfahren der direkten thermooptisch induzierten Auskopplung dem vorstehend behandelten Verfahren.

Auskopplung über ein elektrooptisch induziertes Brechungsindexgitter:

Bei der anhand von Fig. 10a beschriebenen Auskoppelmethode wird der Abtrahlwinkel im wesentlichen bestimmt durch den lokal elektrooptisch erzielbaren Brechungsindex-Unterschied im Isolatormaterial. Durch geeignete Ausformung der Deckelelektrode 3 ist es möglich, eine periodische Modulation des Brechungsindexes zu erzielen und hierdurch ein zeitlich variables Phasengitter zu erzeugen. Hierdurch wird einerseits eine effizientere Ankopplung zwischen den Wellenleitermethoden und einer gebrochenen, d.h. aus der Displayebene nach vorne austretenden Welle erzielt, andererseits ergibt sich durch geeignete Wahl der Gitterparameter auch die Möglichkeit, den Abstrahlwinkel zu beeinflussen, d. h. insbesondere größere Abstrahlwinkel zu erreichen (Fig. 10c). Zur Realisierung einer solchen periodischen Modulation wird jede Spaltenelektrode 1 jeweils zu einem Kamm 37 begrenzter Breite ausgeformt. Bei Displayabmessungen von beispielsweise $5 \times 5$ cm$^2$ könnte jede der Spalten etwa 100 um breit sein und damit eine Anzahl von Perioden umfassen. Die Gegenelektrode 36 ist in diesem Fall zwischen Substrat 4 und Wellenleiterschicht 3 aufzubringen.

Auskopplung durch induzierte Streuung:
Alternativ zu den oben beschriebenen Methoden, die Wllenleitermoden an strahlende Moden im Außenraum anzukoppeln, kann Licht auch durch induzierte Streuung aus dem Wellenleiter in den Halbraum vor dem Display umgelenkt werden:
Gemäß der Ausführungsform in Fig. 10d enthält der Wellenleiter 3 eingeschlossene Mikrotröpfchen 38 aus einem nematisch-flüssigkristallinen Material. Ein angelegtes elektrisches Feld ruft Turbulenz in der flüssigkristallinen Phase 38 hervor und hierdurch wird eine Streuung des im Wellenleiter 3 geführten Lichtes induziert. Diese Streuung beruht darauf, daß die optischen Eigenschaften der flüssigkristallinen Mikrotröpfchen anisotrop sind, d. h. diese weisen in verschiedenen Richtungen einen unterschiedlichen Brechungsindex auf. Ist dieser bei einheitlich ausgerichteten Molekülen gerade in der relevanten Richtung dem Brechungsindex des umgebenden und den Wellenleiter bildenden Matrixmaterials angepaßt, so erscheint das Material homogen und eine Streuung tritt nicht auf. Bei Verlust der Vorzugsorientierung oder bei gezielter Umorientierung dagegen wird das Wellenleitermaterial inhomogen und streut in der Folge das bisher im Wellenleiter geführte Licht stark. Die elektrisch bewirkte lokale Änderung der Orientierung in den Mikrotröpfchen führt also zu einer Abstrahlung nach außen und damit zu einem hellen Punkt auf dem Display.

Eine solche Streuung läßt sich auch nach der in Fig. 10 e schematisch dargestellten Methode erreichen, bei der der Wellenleiter nach dem Prinzip des Christiansen-Filters aufgebaut ist. Der Wellenleiter besteht hierbei ebenfalls aus zwei Phasen, deren Brechungsindex $n_1$ und $n_f$ im Normalzustand, also bei einer Temperatur $T_1$ übereinstimmen, die aber einen unterschiedlichen Temperaturkoeffizienten des Brechungsindexes aufweisen. Durch lokale Erhöhung der Temperatur ergeben sich für beide Phasen unterschiedliche Brechungsindizes und damit eine Streuung des im Wellenleiter bis dahin geführten Lichts.

Für eine Farbansteuerung des erfindungsgemäßen Displays sind grundsätzlich zwei verschiedene Alternativen möglich:
- die integriert-optische Struktur zur Verteilung der Bildinformation enthält für jede Farbe getrennte Wellenleiter oder
- die Farbansteuerung erfolgt im Zeitmultiplex durch sequentielles Einkoppeln verschiedener Farben in die gleiche Verteilungsstruktur.

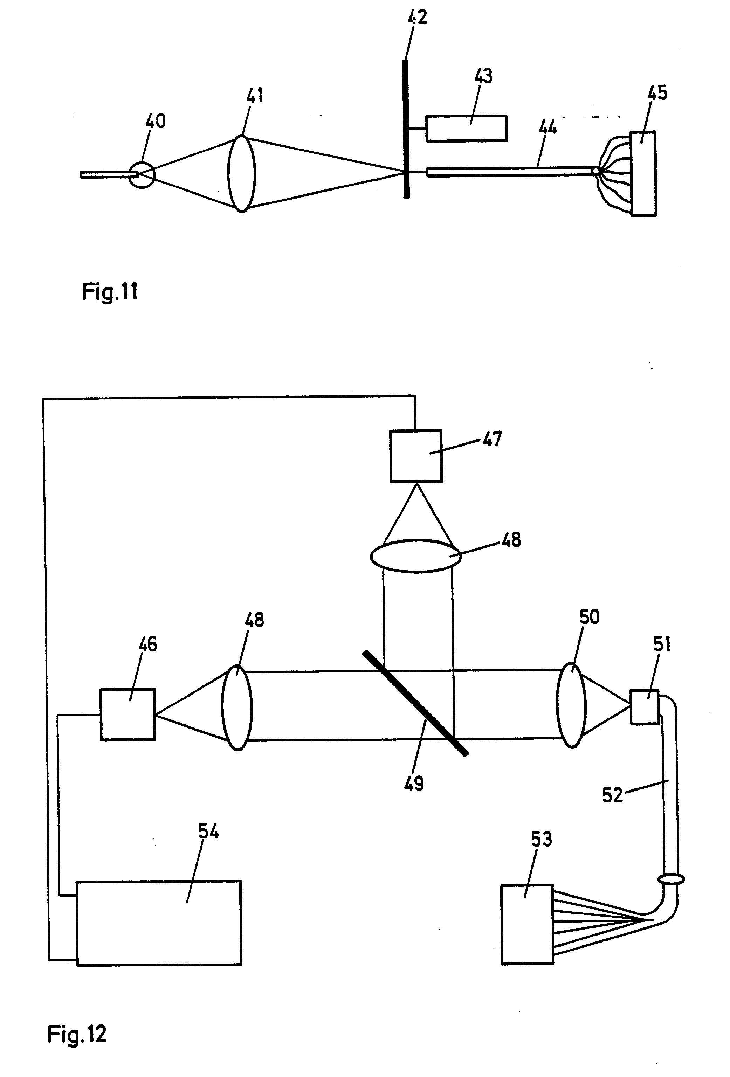

Bei Farbansteuerung im Zeitmultiplex ist die Verwendung einer polychromatischen Lichtquelle mit sequentiell wechselndem Farbfilter (Fig. 11) oder die Verwendung von mehreren monochromatischen Lichtquellen in Kombination mit einem dichroitischen Filterspiegel (Fig. 12) möglich.

Hierzu zeigt Fig. 11 eine Lichtquelle 40, deren Licht durch einen Kondensor 41 hindurchgeschickt wird. Von dort gelangt das gebündelte Licht zu einem Filterrad 42, das über einen Motor 43 in Drehung versetzt werden kann. Am Umfang des filterrades sind Farbfilter vorgesehen, vorzugsweise in den Farben Cyan, Gelb und Magenta.

Hinter dem Filterrad ist ein Lichtleiter 44 angeordnet, der das gefilterte Licht an eine Lichtverteiler-Optik 45 weitergibt.

Bei der Ausführungsform nach Fig. 12 erfolgt die Farbansteuerung im Zeitmultiplexverfahren. Hierfür ist eine erste Leuchtdiode 46 vorgesehen, die beispielsweise in der Farbe Magenta leuchtet. Eine zweite Leuchtdiode 47 leuchtet beispeilswese in der Farbe Gelb. Das Licht beider Leuchtdioden wird durch Linsen 48 parallel ausgerichtet und trifft auf einen dichroitischen Spiegel 49. Das durch diesen halbdurchlässigen Spiegel hindurchgehende bzw. von ihm reflektierte Licht wird über einen Kolimator 50 auf den Eingang 5 eines Lichtleiters 52 gebündelt und verläßt den Lichtleiter und tritt dann in eine Lichtverteileroptik 53 ein. Pos. 54 deutet eine Ansteuerung für die beiden Leuchtdioden 46, 47 an.

Bei dem erfindungsgemäßen Bildschirm handelt es sich somit um einen aktiven Bildschirm, bei dem sich folgende wesentliche Funktionselemente unterscheiden lassen:
- Lichterzeugung und Bildinhalts-Modulation,
- zweidimensionale räumliche Lichtverteilung und
- Lichtauskopplung.

Die Lichterzeugung geschieht mittels bekannten Lichtquellen, die bei einigen Ausführungsformen auch eine direkte Bildinhalts- (Hell-/Dunkel-) Modulation erlauben. Bei anderen Ausführungsformen werden spezielle Modulatoren verwendet.

Die räumliche Lichtverteilung geschieht über ein integriertoptisches Wellenleiterarray oder über ein Array von Glasfasern. Die räumlich verteilte Lichtauskopplung geschieht über elektrooptiche, thermooptische oder optomechanische Verfahren. Hierzu wird die integriert-optische Lichtverteilungsstruktur mit einer senkrecht dazu verlaufenden Struktur von parallelen elektrischen Streifenelektroden verknüpt. Die Kreuzungsstellen dieser Streifenelektroden mit den Lichtwellenleitern definieren die Bildpunkte. Die Ansteuerung der Streifenelektroden (Auskopplung) ist mit der Bildinhalts-Modulation synchronisiert.

## Ansprüche

1. Aktiver Bildschirm in Flachbauweise mit in zwei Gruppen, nämlich in Zeilen und Spalten angeordneten Signalleitungen, die an ihren Kreuzungspunkten (5) Bildpunkte des Bildschirms definieren, mit einer Steuerung (9,11) und Signalaufbereitung (8) für die den Signalleitungen zugeleiteten Bildinformationen und mit wenigstens einem Lichtelement (18), das an jedem Kreuzungspunkt (5) entsprechend den Signalen moduliertes Licht aussendet, dadurch gekennzeichnet, daß eine der beiden Gruppen der Signalleitungen durch Lichtwellenleiter (3) gebildet wird, in die eingangsseitig das modulierte Lichtsignal eingekoppelt wird, und die an jedem der Kreuzungspunkte (5) eine von der Steuerung (9, 11) beaufschlagbare Einrichtung (14) zum Auskoppeln des in diesem Lichtwellenleiter (3) vorhandenen optischen Signals in einer im wesentlichen senkrecht zur Ebene des Bildschirms verlaufenden Richtung aufweisen.

2. Aktiver Bildschirm nach Anspurch 1, dadurch gekennzeichnet, daß die Lichtauskopplung aus den Lichtwellenleitern (3) im Bereich der einzelnen Bildpunkte (5) durch eine von der Ansteuerung der als Streifenelektroden (1) ausgebildeten anderen Gruppe der Signalleitungen abhängige Brechungsindexänderung oder eine Modulation der Totalreflexion in den Lichtwellenleitern (3) erzielbar ist.

3. Aktiver Bildschirm nach Anspruch 1 oder 2, dadurch gekennzeichnet, daß die Lichtwellenleiter (3) in Form von Streifenleitern in einer Substratplatte (4) integriert sind oder in Form von optischen Fasern ausgebildet sind, welche zusammen auf einer Substratplatte (4) befestigt sind.

4. Aktiver Bildschirm nach einem der Ansprüche 1 bis 3, dadurch gekennzeichnet, daß die Lichteinkopplung in die einzelnen Lichtwellenleiter (3) individuell ansteuerbare lichtemittierende Dioden oder Diodenlaser vorgesehen sind.

5. Aktiver Bildschirm nach einem der Ansprüche 1 bis 3, dadurch gekennzeichnet, daß zur Lichteinkopplung in die einzelnen Wellenleiter (3) über eine einzige unmodulierte Lichtquelle (18) mit nachgeschalteter Lichtverteilungsoptik (19,21) erfolgt und daß sich vor jeder Lichteinkoppelstelle in die Wellenleiter (3) ein einzeln ansteuerbarer optischer Modulator (20) befindet.

6. Aktiver Bildschirm nach Anspruch 5, dadurch gekennzeichnet, daß die Lichtquelle (18) als Miniatur-$ZrO_2$-Bogenlampe oder als Miniatur-Glühlampe ausgebildet ist, daß die Lichtquelle auf die Stirnseite eines ersten Lichtleiters (21) mit entsprechend großem Kerndurchmesser abgebildet wird, daß dieser erste Lichtleiter mit einem Lichtleiterbündel (19) von etwa demselben Durchmesser gekoppelt ist und daß dieses Bündel in ein Lineararray aufgefächert wird, wobei jeder einzelne Lichtleiter an den einzeln ansteuerbaren optischen Modulator (20) angekoppelt ist.

7. Aktiver Bildschirm nach Anspruch 5 oder 6, dadurch gekennzeichnet, daß die optischen Modulatoren (20) in Form eines elektrisch angesteuerten Lineararrays auf eine gemeinsame Substratplatte integriert sind.

8. Aktiver Bildschirm nach einem der Ansprüche 5 bis 7, dadurch gekennzeichnet, daß die optischen Modulatoren (20) aus einem Eingangspolarisator, einer angesteuerten elektrooptischen Kerrzelle und einem Ausgangspolarisator bestehen derart, daß ein elektrisches Steuersignal in eine Lichtamplitudenmodulation umgewandelt wird.

9. Aktiver Bildschirm nach Anspurch 8, dadurch gekennzeichnet, daß die Kerrzelle aus einer elektrooptischen Keramik vom Typ PLZT oder aus einem elektrooptischen Polymer besteht.

10. Aktiver Bildschirm nach einem der Ansprüche 5 bis 7, dadurch gekennzeichnet, daß die optischen Modulatoren (20) als piezoelektrisch, elektrodynamisch, elektromagnetisch oder elektrostatisch stellbare Blendenlamellen (25) ausgeführt sind, welche in einen Trennspalt (22) jeweils eines Wellenleiters (3) oder einer optischen Faser (3) hineinreichen, derart, daß der jeweilige Lichtstrom entsprechend der Lamellenstellung geschwächt wird.

11. Aktiver Bildschirm nach einem der Ansprüche 5 bis 7, dadurch gekennzeichnet, daß die optischen Modulatoren (20) als optomechanische Totalreflexionsmodulatoren ausgebildet sind, wobei bei jedem ein schief zur Strahlrichtung angeordneter optischer Trennspalt vorgesehen ist, dessen Spaltbreite durch ein piezolelektrishes Stellelement (26) zwischen Null und einem Maximum von einigen Lichtwellenlängen verändert werden kann.

12. Aktiver Bildschirm nach einem der Ansprüche 5 bis 7, dadurch gekennzeichnet, daß die optischen Modulatoren (20) in der Form von parallelen, integriert optischen Streifenleitern (3) ausgebildet sind, daß eine elektrooptische Isolatorschicht (2) die optischen Streifenleiter überdeckt, daß oberhalb und parallel zu den optischen Streifenleitern auf der Isolatorschicht jeweils ein elektrisches Streifenelektrodenpaar (1) angeordnet ist derart, daß bei Anlegen eines zeileninhaltsmodulierten elektrischen Feldes an ein Elektrodenpaar der Brechungsindex der Isolatorschicht derart erhöht wird, daß die Brechungsindexdifferenz zum entsprechenden darunter liegenden optischen Streifenleiter verkleinert wird und daß der Winkelbereich, innerhalb welchem der optische Streifenleiter zur Isolatorschicht Totalreflexion erzeugt, entsprechend erniedrigt wird, wodurch der vom optischen Streifenleiter transmittierte Lichtstrom entsprechend moduliert wird.

13. Aktiver Bildschirm nach einem der Ansprüche 1 bis 12, dadurch gekennzeichnet, daß jede Streifenelektrode (1) zweigeteilt und für Licht transparent ausgeführt ist und zwischen den beiden Teilen (30,31) jeweils ein transparentes piezoelektrisches Stellelement (32) vorgesehen ist, wobei die Dicke der piezoelektrischen Elemente zwischen den beiden Teilen der Streifenelektroden entsprechend der zur Ansteuerung der Streifenelektroden angelegten Spannung veränderbar ist, daß an jeder Elektrode eine die Strahlung auskoppelnde optische Kontaktschicht (33) angebracht ist und daß die mit den piezoelektrischen Stellelementen versehenen Streifenelektroden auf einer transparenten Deckplatte (34) derart befestigt sind, daß im elektrisch angesteuerten Zustand zwischen den Kontaktschichten und den Lichtwellenleitern ein geringer Abstand entsteht, der zu einer Totalreflexion im Lichtleiter führt und daß nach Abschalten der Steuerspannung die Dicke der piezoelektrische Stellelemente zunimmt derart, daß der Abstand zum Wellenleiter zu Null wird und das Licht quer durch die Kontaktschicht zum Beobachter hin ausgekoppelt wird.

14. Aktiver Bildschirm nach einem der Ansprüche 1 bis 12, dadurch gekennzeichnet, daß jede Streifenelektrode (1) zweigeteilt ausgeführt ist und zwischen den beiden Teilen (30,31) jeweils ein piezoelektrisches Stellelement (32) vorgesehen ist, wobei die Dicke der piezoelektrischen Elemente entsprechend der zur Ansteuerung der Streifenelektroden angelegten Spannung veränderbar ist, daß auf den Streifenelektroden jeweils ein erstes prismatisches Element (39a) angebracht ist, daß auf dem ersten prismatischen Element jeweils eine lichtreflektierende Spiegelschicht (39b) aufgebracht ist und auf dieser wiederum jeweils ein zweites transparentes prismatisches Element (39c), dessen Oberfläche parallel zur Oberfläche der Lichtwellenleiter liegt, und daß jeweils die gesamten Bauelemente bestehend aus den Streifenelktroden, den piezoelektrischen Elementen und den prismatischen Elementen auf einer Bodenplatte (34) derart befestigt sind, daß im elektrisch eingeschalteten Zustand zwischen den durchsichtigen zweiten prismatischen Elementen und den Lichtleitern ein geringer Abstand entsteht, der zur Totalreflexion in den Lichtleitern (3) führt, und daß nach Abschalten der elektrischen Steuerspannung dieser Abstand verschwindet derart, daß ein wesentlicher Bruchteil des Lichts aus dem Lichtleiter austritt und nach Durchqueren des prismatischen Elements auf der Spiegelschicht reflektiert wird und hierauf nach nochmaligem Durchqueren des prismatischen Elements quer durch den Lichtleiter und die Deckplatte zum Beobachter hin ausgekoppelt wird.

15. Aktiver Bildschirm nach einem der Ansprüche 1 bis 12, dadurch gekennzeichnet, daß zwischen den Streifenelektroden (1) und den Lichtwellenleitern (3) eine transparente Isolatorschicht (2) vorgesehen ist, deren Brechungsindex im nicht angesteuerten Zustand der Streifenelektroden kleiner ist als der Brechungsindex der Lichtwellenleiter und im angesteuerten Zustand der Streifenelektroden lokal dem Brechungsindex der Lichtwellenleiter anpassbar ist, so daß das Licht im Wellenleiter nicht mehr geführt und an diesem Punkt ausgekoppelt wird.

16. Aktiver Bildschirm nach Anspruch 15, dadurch gekennzeichnet, daß jeweils zwei benachbarte Streifenelektroden (1) oder eine über und eine unter den Lichtwellenleitern (3) angebrachte Streifenelektrode gemeinsam ansteuerbar sind und die zur Ansteuerung der Streifenelektroden angelegte Spannung ein elektrisches Feld erzeugt, das eine Änderung des Brechungsindexes der Isolatorschicht herbeiführt.

17. Aktiver Bildschirm nach Anspruch 15, dadurch gekennzeichnet, daß die zur Ansteuerung der Streifenelektroden angelegte Spannung eine lokale Temperaturerhöhung der Isolatorschicht herbeiführt, durch die der Brechungsindex der Isolatorschicht veränderbar ist.

18. Aktiver Bildschirm nach Anspruch 15, dadurch gekennzeichnet, daß jede Streifenelektrode (1) kammförmig in mehrere Leiter (37) aufgeteilt und eine weitere Elektrodenschicht vorgesehen ist und daß durch die zur Ansteuerung der Streifenelektroden angelegte Spannung der Brechungsindex der Isolatorschicht periodisch veränderbar ist.

19. Aktiver Bildschirm nach Anspruch 15, dadurch gekennzeichnet, daß die Isolatorschicht (2) aus flüssigkristallinem Material besteht, dessen Brechungsindex anisotop ist und von der Ausrichtung der Flüssigkristalle abhängt und der durch Anlegen eines elektrischen Feldes an die Streifenelektroden in geeigneter Weise verändert werden kann.

20. Aktiver Bildschirm nach einem der Ansprüche 1 bis 12, dadurch gekennzeichnet, daß die Lichtwellenleiter (3) aus mindestens zwei Phasen bestehen, deren Brechungsindices im nicht angesteuerten Zustand der Streifenelektroden übereinstimmen, und daß durch die zur Ansteuerung der Streifenelektroden (1) angelegte Spannung die Brechungsindices der beiden Phasen lokal in unterschiedlicher Weise veränderbar sind, so daß sie nicht mehr übereinstimmen, wodurch eine Streuung des vorher im Wellenleiter geführten Lichts hervorgerufen wird.

21. Aktiver Bildschirm nach Anspruch 20, dadurch gekennzeichnet, daß die Lichtwellenleiter (3) nach dem Prinzip eines elektrisch oder thermisch ansteuerbaren Christiansen-Filters aufgebaut sind derart, daß bei Brechungsindexgleichheit der zwei Phasen des Wellenleiters das Licht sich im Wellenleiter fortpflanzt und daß bei Brechungsindexgleichheit Licht aus dem Wellenleiter in Richtung des Beobachters gestreut wird (Fig. 10e).

22. Aktiver Bildschirm nach Anspruch 20, dadurch gekennzeichnet, daß die Lichtwellenleiter aus einer Matrix mit eingeschlossenen Mikrotröpfchen (38) aus einem flüssigkristallinen Material bestehen derart, daß bei einer be stimmten, durch das angelegte elektrische Feld induzierten Ausrichtung der Flüssigkristalle eine Streuung des Lichts im Wellenleiter unterdrückt wird, während die Tröpfchen im ungeordneten Zustand zu einer Streuung des Lichts in Richtung des Beobachters führen.

23. Aktiver Bildschirm nach einem der Ansprüche 1 bis 4 und 13 bis 22, dadurch gekennzeichnet, daß eine Farbansteuerung durch die Ausbildung der Wellenleiter (3) in Form von parallel nebeneinanderliegenden Paaren oder Tripeln von Lichtwellenleitern ermöglicht wird derart, daß in jedem Wellenleiter einer solchen Gruppe nur Licht einer Leuchtdiode geeigneter Farbe (rot, gelb, grün oder blau) eingekoppelt wird.

24. Aktiver Bildschirm nach einem der Ansprüche 1 bis 3 und 5 bis 22, dadurch gekennzeichnet, daß eine Farbansteuerung im Zeitmultiplex durch Verwendung einer polychromatischen Lichtquelle (4) und eines sequentiell wechselnden Farbfilters (42) ermöglicht wird derart, daß durch eine Lichtverteilungsoptik nacheinander ein Farbtripel (rot, gelb, blau) in den gleichen Wellenleitern (44) eingekoppelt wird.

25. Aktiver Bildschirm nach einem der Ansprüche 1 bis 3 und 5 bis 22, dadurch gekennzeichnet, daß eine Farbansteuerung im Zeitmultiplex durch Verwendung von zwei oder drei monochromatischen Lichtquellen (46,47) ermöglicht wird, derart, daß Licht von diesen Lichtquellen nacheinander über einen dichroitischen Filterspiegel (49) an ein und denselben Fokusort (51) gelenkt und dann über die Lichtverteilungsoptik (52,53) in die Wellenleiter (3) eingekoppelt wird.

Geänderte Patentansprüche gemäss regel 86(2) EPÜ.

1. Aktiver Bildschirm in Flachbauweise mit in zwei Gruppen, nämlich in Zeilen und Spalten angeordneten Signalleitungen, die an ihren Kreuzungspunkten (5) Bildpunkte des Bildschirms definieren, mit einer Steuerung (9,11) und Signalaufbereitung (8) für die den Signalleitungen zugeleiteten Bildinformationen und mit wenigstens einem Lichtelement (18), das an jedem Kreuzungspunkt (5) entsprechend den Signalen moduliertes Licht aussendet, wobei eine der beiden Gruppen der Signalleitungen durch Lichtwellenleiter (3) gebildet wird, in die eingangsseitig das modulierte Lichtsignal eingekoppelt wird, und die an jedem der Kreuzungspunkte (5) eine von der Steuerung (9, 11) beaufschlagbare Einrichtung (14) zum Auskoppeln des in diesem Lichtwellenleiter (3) vorhandenen optischen Signals in einer im wesentlichen senkrecht zur Ebene des Bildschirms verlaufenden Richtung aufweisen, dadurch gekennzeichnet, dass die Lichtauskopplung aus den Lichtwellenleitern (3) im Bereich der einzelnen Bildpunkte (5) durch eine von der Ansteuerung der anderen Gruppe der Signalleitungen abhängige Brechungsindexänderung oder eine Modulation der Totalreflexion in den Lichtwellenleitern (3) erzielbar ist.

2. Aktiver Bildschirm nach Anspruch 1, dadurch gekennzeichnet, daß die steuernden Signalleitungen im Bereich des Bildschirms als Streifenelektroden (1) ausgebildet sind.

Fig.1

Fig. 2

Fig. 3

Fig.4

Fig. 5

a)

b)

Fig.6

a)

b)

Fig.7

Fig.8

Fig.9

Fig.10

Fig.11

Fig.12

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | PATENT ABSTRACTS OF JAPAN, Band 8, Nr. 282 (P-323)[1719], 22. Dezember 1984; & JP - A - 59 148 030 (SONY) 24.08.1984 * Zusammenfassung; Figuren 2, 3, 5, 6 * | 1,2 | H 04 N 3/12<br>G 09 F 9/30<br>G 02 F 1/19 |
| A | idem | 15,16, 23 | |
| | --- | | |
| X | US-A-3 700 802 (MARKIN et al.) * Zusammenfassung; Spalte 1, Zeilen 20-50; Spalte 1, Zeile 62 - Spalte 2, Zeile 4; Spalte 2, Zeile 34 - Spalte 4, Zeile 7; Spalte 4, Zeile 37 - Spalte 5, Zeile 7; Spalte 7, Zeile 16 - Spalte 8, Zeile 31; Spalte 9, Zeilen 33-44; Ansprüche 9, 10; Figuren 1-3, 9 * | 1 | |
| A | | 2,3 | RECHERCHIERTE SACHGEBIETE (Int. Cl.4)<br><br>G 09 F 9/00<br>H 04 N 3/00<br>G 02 B 5/00<br>G 02 F 1/00 |
| | --- | | |
| A | US-A-4 280 125 (KAZAN) * Zusammenfassung; Spalte 2, Zeile 7 - Spalte 3, Zeile 5; Spalte 4, Zeilen 37-48; Ansprüche 1-3; Figuren 1, 2 * | 1,3,4 | |
| | --- -/- | | |

Der vorliegende Recherchenbericht wurde für alle Patentansprüche erstellt.

| Recherchenort | Abschlußdatum der Recherche | Prüfer |
|---|---|---|
| BERLIN | 09-10-1987 | BEITNER M.J.J.B. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

| | Europäisches Patentamt | EUROPÄISCHER RECHERCHENBERICHT | Nummer der Anmeldung |
|---|---|---|---|
| | | | EP 87 10 2028 |

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 578 709 (LANG et al.)<br>* Zusammenfassung; Spalte 2, Zeilen 17-56; Figuren 1, 2 *<br><br>--- | 1 | |
| A | DE-B-1 107 340 (AGFA)<br>* Spalte 3, Zeile 4 - Spalte 4, Zeile 64; Spalte 5, Zeile 58 - Spalte 6, Zeile 45; Figuren 1, 2, 5 *<br><br>--- | 1,2 | |
| A | PATENT ABSTRACTS OF JAPAN, Band 2, Nr. 145 (E-75)[9702], 4. Dezember 1978; & JP - A - 53 113 571 (RICOH) 04.10.1978<br><br>--- | 15,16 | |
| A | APPLIED OPTICS, Band 20, Oktober 1981, Seiten 3600-3604, New York, US; K. WILNER "Design considerations and test results of an evanescent switch attenuator"<br>* Seite 3600, I. Introduction; Seite 3601, Figur 1 *<br><br>----- | 13 | RECHERCHIERTE SACHGEBIETE (Int. Cl.4) |

Der vorliegende Recherchenbericht wurde für alle Patentansprüche erstellt.

| Recherchenort | Abschlußdatum der Recherche | Prüfer |
|---|---|---|
| BERLIN | 09-10-1987 | BEITNER M.J.J.B. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82